# EUROPEAN PATENT APPLICATION

(11) **EP 4 475 019 A1**
(43) Date of publication of application: **11.12.2024**
(21) Application number: 24180625.6
(22) Date of filing: 06.06.2024
(51) Int. Cl.: G06F 21/55

(54) **ADAPTIVE DATA COLLECTION FOR ALERTS**

(30) Priority: 09.06.2023 US 202318332550
(71) Applicant: BlackBerry Limited, Waterloo, Ontario N2K 0A7 (CA)
(72) Inventor: LOMBARDI, Robert Joseph, Waterloo, N2K 0A7 (CA); WILLIAMS, Jeffrey D., Waterloo, N2K 0A7 (CA)
(74) Representative: Novagraaf International SA

(57) **Abstract**

In some examples, a system monitors operations in at least one electronic device in which entities are started, created, or modified, and generates an alert based on the monitoring. The system adapts an amount of data collected based on contextual information associated with the alert, where the adapting of the amount of data collected comprises determining whether to include or exclude data associated with a subset of the entities based on any relationships of the subset of the entities to an entity associated with the alert.

## Description

### Background

Electronic devices may experience various security issues that can result in malfunctioning of the electronic devices or loss or theft of data. For example, electronic devices may be targets of attacks by various malicious entities, including humans, programs (e.g., viruses, worms, ransomware, etc.), and/or machines. Other types of security issues that may be experienced by electronic devices include electronic devices visiting potentially malicious or infected online resources (e.g., websites with low reputation scores, certain social media sites, etc.), electronic devices communicating sensitive data in an insecure manner or with an unauthorized entity, electronic devices accessing a program on an unknown network, electronic devices updating a program or failing to update a program to a specific version, and so forth.

### Brief Description of the Drawings

Some implementations of the present disclosure are described with respect to the following figures.
FIG. 1 is a block diagram of an example arrangement that includes a security system coupled to various electronic devices, according to some examples.
FIGS. 2-3 are graphs illustrating examples of adaptive data collection by a security system according to some implementations of the present disclosure.
FIGS. 4-5 are graphs illustrating examples of intelligent responses by a security system to respective alerts according to some implementations of the present disclosure.
FIG. 6 is a block diagram of a security system according to some examples.
FIG. 7 is a flow diagram of a process according to some examples.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

Security systems can generate alerts in response to detected events that are indicative of potential security issues. In some cases, a security system can include endpoint security mechanisms that are part of electronic devices. The endpoint security mechanisms are run locally in respective electronic devices to detect events that are indicative of potential security issues. Examples of endpoint security mechanisms can include malware scanners that are able to detect presence of malware (e.g., viruses, worms, ransomware, etc.), user and entity behavior analytics (UEBA) mechanisms to detect anomalies in behaviors of users or other entities, lateral movement detectors, and so forth.

An alert may be generated by a security system due to operations in an electronic device, where the operations can include activities associated with one or more entities in the electronic device. Entities can include any or some combination of processes, objects, resources, users, and so forth.

A "process" can refer to program (including machine-readable instructions) under execution in the electronic device. A process in the electronic device can cause execution of another process in the electronic device (or in another electronic device).

Additionally, a process can create or modify an object in the electronic device. An "object" can refer to an artifact, configuration information, a network connection, a scheduled task such as in a queue, or a call of an application programming interface (API) or a library, a user account, as examples.

An artifact can refer to a file, a database, or any other type of data that is created or modified (updated or deleted) as part of the operation of a process. Configuration information relates to a configuration of the electronic device or a component in the electronic device. In an example, a registry, such as associated with an operating system (OS) of the electronic device), can include configuration information related to settings, options, or other values for hardware and software components in the electronic device. A process can create a registry or modify a registry. A registry can include multiple registry entries relating to different settings, options, or other values for hardware and software.

A process can also establish, modify, or tear down a network connection. Additionally, a process can add a scheduled task to a queue, or make a call to an API or a library.

A resource can refer to a website, a domain name system (DNS) server, or any other type of resource accessible by an electronic device. A file may be downloaded from a website. A process may interact with a website. An electronic device may interact with a DNS server to obtain an Internet Protocol (IP) address associated with a domain name. There are many other examples of resources that an electronic device can interact with.

A security system can collect various data relating to operations of an electronic device for analysis to determine whether an attack is occurring and what if any remediation actions to take for an alert. The data collected can include information pertaining to a group of entities associated with the alert as well as information pertaining to other entities that may be directly or indirectly related to the entities associated with the alert. A group of entities is "associated with the alert" if activities involving the group of entities led a security system to issue the alert. An alert provides an indication that an issue has been detected that potentially may be indicative of an attack occurring in the electronic device. In some examples, a collection of data may be triggered by the occurrence of one or more alerts. The collection of data triggered by one or more alerts may be in addition to data collected in the electronic device as part of operations of the electronic device.

There can be a difficult balance between collecting sufficient data so that a meaningful analysis can be performed in response to one or more alerts, as opposed to collecting too much data which may be wasteful of system resources and may cause the amount of data collected to exceed one or more target data amount thresholds. The one or more target data amount thresholds can be preconfigured, and may be specified by a human administrator, a program, or a machine. In an example, the one or more target data amount thresholds can include a soft target data amount threshold and a hard target data amount threshold for a given time interval (e.g., a 24-hour time interval, a one-week time interval, etc.). If the amount of data collected in the given time interval exceeds the soft target data amount threshold, then the security system may reduce the amount of data collected after the soft target data amount threshold is exceeded. If the amount of data collected in the given time interval exceeds the hard target data amount threshold, then the security system may stop collecting any further data in the given time interval.

For example, if the given time interval is 24 hours, collecting too much data early in the 24-hour interval may cause an electronic device to be more at risk later in the 24-hour interval because the security system is forced to collect less data or is prevented from collecting any further data because the one or more target data amount thresholds have been exceeded.

In accordance with some implementations of the present disclosure, an adaptive data collector is provided to adapt an amount of data collected in an electronic device (or in multiple electronic devices) based on contextual information associated with an alert that has been detected. The adaptive collection of data based on contextual information allows for the amount of data collected to vary based on various indicated contexts.

Examples of contexts that can be represented by contextual information can include any or some combination of the following: a severity context to indicate a severity of the alert, a risk context to indicate a risk of the alert, an anomaly context to indicate a uniqueness of an anomaly associated with the alert, a type context to indicate a type of the alert, an intelligence context to indicate an intelligence associated with the alert, a unified context relating to events occurring across multiple electronic devices, and so forth.

The data collected by the adaptive data collector relates to operations of entities in a system that includes one or more electronic devices and network(s) to which the one or more electronic devices are connected. Examples of data that can be adaptively collected by the adaptive data collector in association with an alert can include any or some combination of the following: a type of a program or an identity of the program from which a process was started, a type of an object or an identity of the object created or modified, a type of a resource or an identity of the resource involved in operations of one or more electronic devices, a type of operation involved (e.g., a write to disk, an unmap or map operation, access of an external network location, a copy or move of an object such as a sensitive file has been performed, etc.), time information associated with an activity of an entity, location data relating to an entity (e.g., geographical data such as Global Positioning System (GPS) data, whether the entity is located inside or outside a geofence when the entity attempted to access an object or a resource, etc.), information of a network that an entity is currently connected to or is attempting to access, information of relationships between entities (e.g., a first process started a second process, a process created or modified an object, an artifact contains program image data for a program, etc.), and various other types of information.

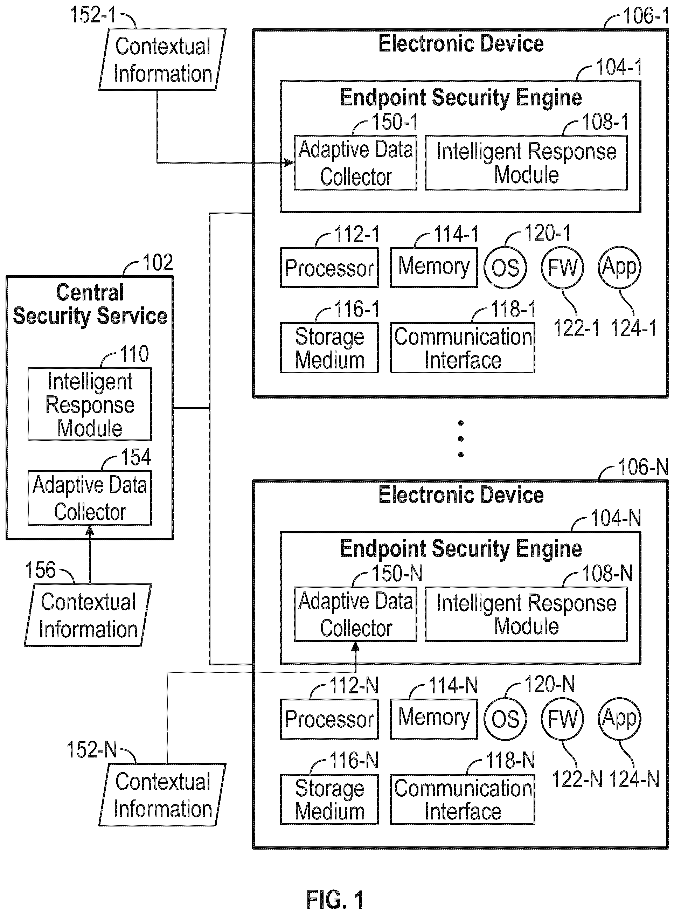

FIG. 1 is a block diagram of an example arrangement that includes a security system to protect various electronic devices. The security system includes a central security service 102 and endpoint security engines 104-1 to 104-N (N ≥ 1) included in respective electronic devices 106-1 to 106-N.

Examples of electronic devices include any or some combination of the following: desktop computers, notebook computers, tablet computers, server computers, smartphones, Internet-of-Things (IoT) devices, household appliances, game appliances, vehicles or vehicle controllers, storage systems, communication nodes, and so forth. The electronic devices 106-1 to 106-N may be located in a network of an enterprise, for example. An "enterprise" can refer to a business concern, an education organization, a government agency, an individual, any group of users, or any other organization. The enterprise network can include a local area network (LAN), a wide area network (WAN), and so forth. Some electronic devices may be coupled to the enterprise network over a public network, such as the Internet.

The endpoint security engines 104-1 to 104-N run locally in the electronic devices 106-1 to 106-N to detect events that are indicative of potential security issues. Examples of endpoint security engines can include malware scanners that are able to detect presence of malware (e.g., viruses, worms, ransomware, etc.), user and entity behavior analytics (UEBA) mechanisms to detect anomalies in behaviors of users or other entities, lateral movement detectors to detect lateral movement of attacking entities that move across electronic devices in a network, and so forth.

Each endpoint security engine 104-i (i = 1 to N) can be implemented using one or more agents, where an "agent" can refer to a software module executed in the electronic device 106-i to perform security functions. The agent(s) of an endpoint security engine is (are) executable on a hardware processing circuit, which can include any or some combination of a microprocessor, a core of a multi-core microprocessor, a microcontroller, a programmable integrated circuit, a programmable gate array, or another hardware processing circuit.

In the example of FIG. 1, the endpoint security engines 104-1 to 104-N can interact with the central security service 102 to enable the central security service 102 to provide protection for multiple electronic devices. A "central" security service can refer to any service that is able to interact with one or more electronic devices to provide security services to protect the one or more electronic devices against an attack. The central security service can be provided in a cloud, at a server, or any other centralized location that allows the central security service to interact with multiple electronic devices.

In accordance with some implementations of the present disclosure, each endpoint security engine 104-i includes a respective adaptive data collector 150-i that adaptively collects data relating to operations in the electronic device 106-i in response to an alert based on contextual information 152-i. For example, the endpoint security engine 104-1 includes an adaptive data collector 150-1 that adaptively collects based on contextual information 152-1 received by the adaptive data collector 150-1. The endpoint security engine 104-N includes an adaptive data collector 150-N that adaptively collects of data in response to an alert based on contextual information 152-N received by the adaptive data collector 150-N.

The central security service 102 similarly includes an adaptive data collector 154 that adaptively collects data based on contextual information 156 received by the adaptive data collector 154. Each adaptive data collector 150-i can include machine-readable instructions that are part of the respective endpoint security engine 104-i, and the adaptive data collector 154 can include machine-readable instructions that are part of the central security service 102.

In some examples, each endpoint security engine 104-i further includes a respective intelligent response module 108-i, which can include machine-readable instructions that are part of the respective endpoint security engine 104-i. The central security service 102 can also include an intelligent response module 110 that can include machine-readable instructions that are part of the central security service 102.

An intelligent response module (any or some combination of 108-1 to 108-N and 110) is able to detect that an alert has been generated in one or more electronic devices, identify any entities outside the scope of the alert, and determine what if any remediation actions should be taken with respect to such entities outside the scope of the alert. An alert can be generated by the security system (the central security service 102 and/or an endpoint security engine 104-1 to 1 04-N) based on alert generation rules. In some examples, the security system can apply machine learning to generate alerts. Upon detecting one or more alerts, the intelligent response modules 108-1 to 108-N and 110 may trigger the adaptive data collectors 150-1 to 150-N and 154 to collect data. Data collected by the adaptive data collectors 150-1 to 150-N and 154 can be fed to the intelligent response modules 108-1 to 108-N and 110. The intelligent response modules 108-1 to 108-N and 110 process the data collected to identify entities outside the scope of alerts and determine any remediation actions to take in response to alerts.

Generally, an entity is "outside the scope" of an alert if the alert does not provide any indication of a security issue associated with the entity. For example, an alert may be raised when a first process starts a second process. After the alert is raised, the second process may start a third process, and the third process can create or modify an artifact. The artifact that is created or modified by the third process may be outside the scope of the alert because the artifact was not directly related to either the first process or the second process (e.g., the artifact was not created or modified by the first process or the second process). As a result, the alert may not indicate that the artifact poses a security issue. In another example, a fourth process may be outside the scope of the alert if the fourth process is part of a chain of entities that is separate from a chain of entities that includes the first process and the second process.

As yet a further example, a registry entry or another object may be outside the scope of the alert if the registry entry or other object was created or modified by a process that is different from the first process and the second process associated with the alert. If an entity outside the scope of the alert is not investigated for a potential security issue, then a remediation action is not applied to the entity, and the entity may later cause a malfunction in the electronic device or cause loss or theft of data.

Each electronic device 106-i further includes a respective hardware processor 112-i, a memory 114-i, a storage medium 116-i, and a communication interface 118-i. The communication interface 118-i allows the electronic device 106-i to communicate over a network, such as with the central security service 102 or with another electronic device.

Programs are executed in the electronic device 106-i on the processor 112-i. Although just one hardware processor is depicted in FIG. 1, the electronic device 106-i can include multiple hardware processors. Programs that are executable on the hardware processor 112-i include an operating system (OS) 120-i, firmware 122-i (e.g., Basic Input/Output System (BIOS) code), and an application program 124-i. Processes in the electronic device 106-i include processes associated with the OS 120-i, firmware 122-i, application program 124-i, or any other program that execute in the electronic device 106-i.

A hardware processor can include a microprocessor, a core of a multi-core microprocessor, a microcontroller, a programmable integrated circuit, a programmable gate array, or another hardware processing circuit. A memory can be implemented using one or more memory devices, such as dynamic random access memory (DRAM) devices, static random access memory (SRAM) devices, flash memory device, and so forth.

A storage medium can include persistent storage such as one or more disk-based storage devices, solid-state drives, and so forth. A communication interface can include a transceiver to transmit and receive signals, as well as any protocol layers (implemented with machine-readable instructions and/or hardware) to implement communication protocols associated with communications over a network.

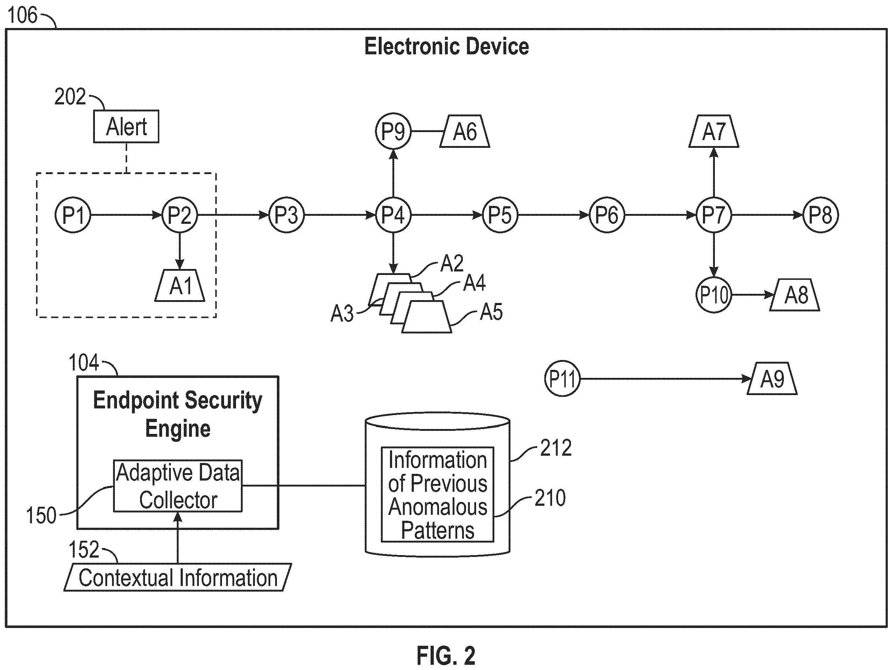

FIG. 2 is an example graph that illustrates various entities involved in operations of an electronic device 106, which can be any of the electronic devices 106-1 to 106-N of FIG. 1. Although FIG. 2 shows operations involving processes and artifacts, it is noted that operations can involve other types of entities in other examples.

In the example of FIG. 2, a process P1 starts a process P2, which in turn creates an artifact A1. For example, the process P1 can issue a command to start the process P2. The artifact A1 created by the process P2 can be a file, for example.

An endpoint security engine 104 (any one of the endpoint security engines 104-1 to 104-N) in the electronic device 106 may issue an alert 202 based on information associated with the process P2 (started by P1) creating the artifacts A1, according to a security alert criterion. For example, the security alert criterion may specify that a process of a particular type of program started by a process of another type of program should not be creating the type of artifact corresponding to A1.

As further shown in the example of FIG. 2, the process P2 starts a process P3, which in turn starts a process P4. The process P4 starts a process P5 and a process P9. In addition, the process P4 creates artifacts A2, A3, A4, and A5. The process P5 starts a process P6, which starts a process P7. The process P7 starts processes P8 and P10.

The process P9 creates an artifact A6, the process P7 creates an artifact A7, and the process P10 creates an artifact A8. As further shown in FIG. 2, a process P11 that does not have any direct relationship with any of the processes P1 to P10 also creates an artifact A9. A first process is not directly related to a second process if the first process was not started or modified by the second process, or vice versa.

An adaptive data collector 150 (any of the adaptive data collectors 150-1 to 150-N of FIG. 1) in the endpoint security engine 104 can adaptively collect data relating to the various entities depicted in FIG. 2 based on contextual information 152 (e.g., any of contextual information 152-1 to 152-N of FIG. 1).

For example, the contextual information 152 may specify a severity context, which indicates a severity of the alert 202. The severity can be at any of multiple severity levels, including high, medium, low, and informational, with informational being the lowest severity level. In other examples, severity levels can be represented using numerical values that indicate respective different severities of alerts.

In an example, if the severity level is medium, the adaptive data collector 150 can collect data associated with processes P1 to P10 and artifacts A1 to A8. However, data is not collected in association with the process P11 and the artifact A9, because there does not appear to be any direct relationship between P11 and A9 and the other entities depicted in FIG. 2. On the other hand, if the severity level is high, the adaptive data collector 150 can collect data associated with all of the processes P1 to P11 and artifacts A1 to A9.

If the severity level is informational, then the adaptive data collector can collect data associated with just P1, P2, and A1, since these are the entities that are associated with the alert 202.

Examples of collected data associated with a process or artifact can include any or some combination of the following: a type of a program or an identity of the program from which a process was started, a type of an artifact or an identity of the artifact created or modified, a type of operation involved, time information associated with an activity of the process or artifact, location data relating to the process or artifact, information of a network that the process or artifact is currently connected to or is attempting to access, information of relationships between the process or artifact and other entities, and various other types of information.

More generally, based on a context (e.g., severity level) specified by the contextual information 152, the adaptive data collector 150 can select a group of entities (from among a larger population of entities involved in various operations when an alert was generated and/or arising after the alert was generated) for which data is to be collected. The selected group of entities can include or exclude data associated with a given subset of entities of the larger population of entities. In the example of FIG. 2, if the severity level is medium, data relating to the subset of entities made up of P11 and A9 would be excluded from collection. On the other hand, if the severity level is high, then data relating to the subset of entities made up of P11 and A9 would be included in the collection by the adaptive data collector 150. If the severity level is informational, data relating to the subset of entities made up of P3-P11 and A2-A9 would be excluded from collection.

The determination of data relating to a subset of entities to be included or excluded by the adaptive data collector 150 can be based on predefined rules. For example, the predefined rules may be set as follows: (1) if the severity level is high, collect data relating to entities that are linked to one another (e.g., the links among P1 to P10 and A1-A8) as well as data relating to entities with a potential indirect relationship (e.g., a temporal relationship, a source relationship, etc.) with respect to the alert 202 (e.g., P11 was started and created A9 within a specified time interval of the alert 202, or P11 and A9 are from a common source, etc.), (2) if the severity level is medium, collect data relating to entities that are linked to one another, but exclude data relating to entities with no direct relationship with the linked entities, (3) if the severity level is low, collect data relating to entities that are linked together and satisfy a criterion (e.g., temporal criterion or another criterion) (e.g., collect data relating to entities that are linked together and that were started, created, or modified within a specified time interval of the alert 202), and (4) if the severity level is informational, collect data relating to entities associated with the alert 202 (e.g., P1, P2, and A1).

Although examples of predefined rules based on severity levels are noted above, in other examples, other rules can be specified for adaptive data collection based on severity of an alert.

Entities linked together (or linked to one another) can be referred to as a chain of directly related entities. A chain of "directly related entities" refers to entities in which a direct relationship exists between successive entities in the sequence. A direct relationship exists between a first entity and a second entity if the first entity affected an operation of the second entity (e.g., one process starting another process) or the first entity created or modified the second entity, or if the second entity affected an operation of the first entity or the second entity created or modified the first entity.

In a further example, for an alert, the adaptive data collector 150 can adaptively collect data relating to the various entities based on an anomaly context specified by the contextual information 152. The anomaly context represents the uniqueness of an anomaly represented by the alert. An anomaly that is more unique is more likely to be associated with malicious activities than an anomaly that is less unique. The anomaly context can also represent a frequency of occurrence of an anomaly represented by the alert. An anomaly that is more frequent even if not unique may be associated with malicious activities.

The uniqueness of an anomaly represented by the alert is based on a pattern associated with the alert. A "pattern" refers to a collection of entities associated with the alert and how the entities interact with one another. For example, the process P1 starting the process P2 which in turn creates the artifact A1 is an example of a pattern. Such a pattern includes P1, P2, and A1 and activities including P1 starting P2 and P2 creating A1. In other examples, more complex patterns can be associated with alerts, where a more complex pattern can involve many more entities and interactions between the entities.

The adaptive data collector 150 compares the pattern associated with the alert 202 to previously encountered patterns. Information of previous anomalous patterns 210 can be stored in a repository 212, which can be in the form of a database or another data structure. The repository 212 can be stored on a storage medium.

The uniqueness of a given pattern can be based on whether or not the pattern is present in the information of previous anomalous patterns 210. If the given pattern does not match any pattern in the information of previous anomalous patterns 210, then the adaptive data collector 150 can identify the given pattern as a unique pattern. If the given pattern matches any pattern in the information of previous anomalous patterns 210, then the adaptive data collector 150 can identify the given pattern as non-unique.

In other examples, rather than performing a binary classification of a pattern as unique or non-unique, the adaptive data collector 150 can assign an indicator of uniqueness to the pattern. The indicator of uniqueness can be set at one of multiple uniqueness levels: including high, medium, and low. In other examples, uniqueness levels can be represented using numerical values that indicate respective different uniqueness of alerts.

As an example, a given pattern has a high uniqueness if the quantity of occurrences of the given pattern in the information of previous anomalous patterns 210 is less than a first threshold. The given pattern has a low uniqueness if the quantity of occurrences of the given pattern in the information of previous anomalous patterns 210 exceeds a second threshold greater than the first threshold. The given pattern has a medium uniqueness if the quantity of occurrences of the given pattern in the information of previous anomalous patterns 210 is greater than the first threshold but less than the second threshold.

Based on the uniqueness level of a pattern associated with the alert 202, the adaptive data collector 150 can select a group of entities (from among a larger population of entities involved in various operations when an alert was generated and/or arising after the alert was generated) for which data is to be collected. The selected group of entities can include or exclude data associated with a given subset of entities of the larger population of entities. Generally, data associated with a greater quantity of entities is collected by the adaptive data collector 150 for an alert associated with a pattern that is more unique.

In addition to uniqueness, another measure of an anomaly represented by an alert is a frequency of occurrence of a pattern associated with the alert. Frequency of occurrence of a pattern refers to a quantity of occurrences of the pattern over a unit time. A higher frequency of the pattern is encountered if a larger quantity of occurrences of the pattern occurred in the unit time. The information of previous anomalous patterns 210 can also include timestamp information of each pattern previously encountered. The timestamp information can be used to determine when respective previous patterns were encountered, so that the adaptive data collector 150 can compute a frequency of occurrence of the pattern.

In an example, if a pattern has a low uniqueness but a high frequency, then the adaptive data collector 150 can collect more data relating to entities than if the pattern has a low uniqueness but a low frequency. The frequency of a pattern can be classified into multiple frequency levels, including, for example, high frequency, medium frequency, and low frequency. The frequency level assigned to a pattern is based on comparing quantities of occurrences of the pattern to respective thresholds, for example.

More generally, based on the anomaly context (including a uniqueness level and a frequency level) specified by the contextual information 152, the adaptive data collector 150 can select a group of entities (from among a larger population of entities involved in various operations when an alert was generated and/or arising after the alert was generated) for which data is to be collected. The determination of data relating to a subset of entities to be included or excluded by the adaptive data collector 150 based on uniqueness and/or frequency can be based on predefined rules.

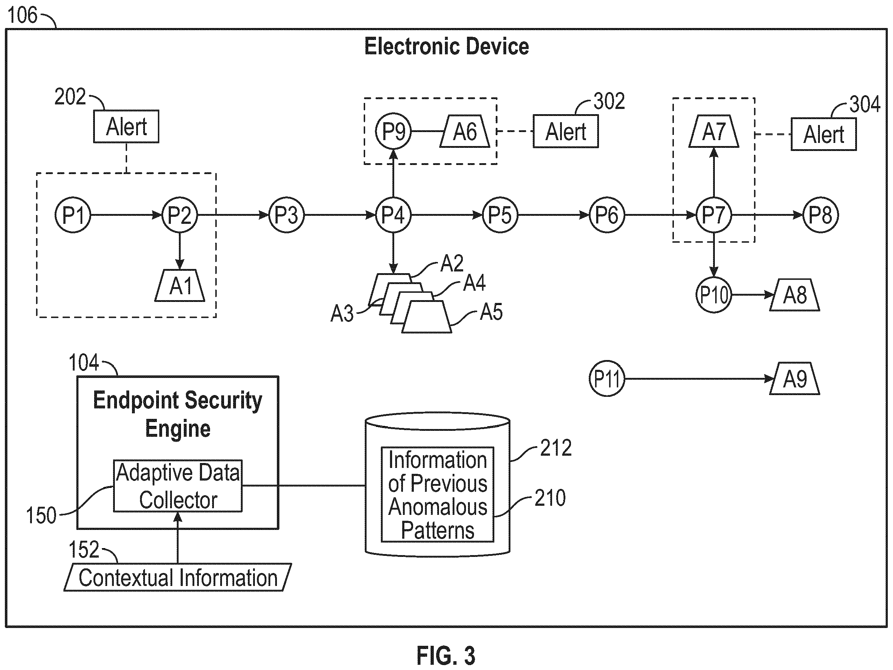

FIG. 3 shows an example of how a risk context can affect the amount of data collected by the adaptive data collector for alerts. The risk of an alert can be based on a quantity of alerts that occur within a time interval of a specified length (i.e., a rate of alerts). In the example of FIG. 3, the process P9 creating the artifact A6 causes the endpoint security engine 104 to generate an alert 302, and the process P7 creating the artifact A7 causes the endpoint security engine 104 to generate an alert 304. The alerts 202, 302, and 304 may all occur within a time interval of the specified length.

If the quantity of alerts within a time interval of the specified length is greater than a quantity threshold, then that indicates an elevated risk. If less than the threshold quantity of alerts occur within the time interval of the specified length, then that indicates a lower risk level. Thus, even if the alerts 202, 302, and 304 are individually alerts of low or medium severity levels, the combination of the alerts 202, 302, and 304 occurring within a relatively short amount of time of one another may be indicative of an elevated risk.

More generally, a risk level can be indicated by a quantity of alerts within a time interval of the specified length, with the risk level being proportional to the quantity of alerts in the time interval of the specified length. If the risk level is high, the adaptive data collector 150 can collect a greater amount of data relating to the entities depicted in FIG. 3. On the other hand, if the risk level is low, then the adaptive data collector 150 can collect a smaller amount of data relating to the entities shown in FIG. 3.

More generally, based on the risk context specified by the contextual information 152, the adaptive data collector 150 can select a group of entities (from among a larger population of entities involved in various operations when an alert was generated and/or arising after the alert was generated) for which data is to be collected. The determination of data relating to a subset of entities to be included or excluded by the adaptive data collector 150 based on risk can be based on predefined rules.

The contextual information 152 can also specify a type context for an alert. The type context indicates a type of alert. Examples types of alerts can include any of the following: detection type, observation type, telemetry type, and anomaly type.

The detection type indicates that a likely security event has happened. An observation type indicates that a possible security event happened (which is less likely than the detection type). The telemetry type indicates that a generally useful event with some specific scope from a security perspective has been observed. An anomaly type indicates that a unique pattern has been observed. In some examples, the adaptive data collector 150 can collect different amounts of data for the different alert types. For example, more data can be collected for the detection type and the anomaly type than for the observation type and the telemetry type.

Examples of the detection type can include alerts based on the following: a malicious file was written to a storage medium, a process has modified the registry to force persistence of an unsigned process (a process that has not been signed with a digital signature), a user attempts to access a resource (e.g., a website) from a restricted geolocation, sensitive files have been attempted to be sent to a file sharing service, a user installed a malicious application, and so forth.

Examples of the observation type can include alerts based on the following: a suspicious memory event (a process unmapping a remote memory) was observed from a signed process, a network connection to an Internet Protocol (IP) address outside the network was made from an unsigned process, a user navigates to a website with a medium or low reputation score, sensitive files have been zipped, a user has accessed an application from an unknown network, and so forth.

Examples of the telemetry type can include alerts based on the following: a specified script was run on an electronic device, a process has started, a user visited a social media site, a sensitive file has been moved from one folder to another folder, a user has updated an operating system (OS) from a prior version to a newer version, and so forth.

Examples of the anomaly type can include alerts based on the following: an interaction between two processes occurred with a unique context (for example, using command line arguments), a DNS server responded with a unique IP address for a well known domain name (where the unique IP address deviates from a prior IP address returned by the DNS server for the domain name), a user has opened a sensitive file for the first time, a user has performed a behavior on sensitive data which is far outside the normal baseline for that user, and so forth.

In other examples, the adaptive data collector 150 can adapt collected data based on an intelligence context specified by the contextual information 152. The intelligence context indicates an intelligence associated with an alert. An intelligence associated with an alert can refer to a threat intelligence. In some examples, definitions of threat intelligence can be provided by an open source knowledge base such as MITRE ATT&CK. Alternatively, definitions of threat intelligence can be provided by a proprietary knowledge base available via paid subscription, such as the Cylance Cyber Threat Intel Report from Blackberry. Definitions of threat intelligence can be available from other sources. Generally, threat intelligence includes a list of known bad Indicators of Compromise (IOCs), which can include any or some combination of the following: a cryptographic hash of a file, a file path, a registry key, a domain name, an IP address, and so forth.

The adaptive data collector 150 can collect more data (e.g., data related to a larger quantity of entities) if the intelligence context includes a threat intelligence indicating that an alert is associated with an entity having a known bad IOC. Any alert that involves an entity having a known bad IOC may be considered a higher risk alert.

In further examples, the adaptive data collector 154 of the central security service 102 can adaptively control the collection of data based on a unified context associated with multiple electronic devices. Since the central security service 102 may reside in the cloud or at another location that allows the central security service 102 to communicate with the multiple electronic devices (e.g., 106-1 to 106-N in FIG. 1), the adaptive data collector 154 can receive the contextual information 156 that specifies the unified context. The unified context can include information of events (including alerts, operations of processes, creation/modification of objects, etc.) from the multiple electronic devices. The adaptive data collector 154 can correlate the information of events from the multiple electronic devices to assess whether or not an attack is likely occurring. If so, the adaptive data collector 154 can trigger the multiple electronic devices to collect a greater amount of data relating to entities.

As an example, the adaptive data collector 154 may detect that a relatively large quantity of alerts is occurring in one or more electronic devices. Such alerts may be mapped to a specific threat actor group, such as a nation state or a criminal organization. Because of the detection of the alerts occurring in the one or more electronic devices, the adaptive data collector 154 can trigger additional electronic devices to collect more data relating to entities in the additional electronic devices, even if alerts were not detect in the additional electronic devices. Note that some entities in the additional electronic devices may be due to malicious attacks that may otherwise have not been detected earlier. This can allow the security system to detect potential malicious intent earlier based on activities occurring on a smaller number of electronic devices, so that earlier remediation actions can be taken.

The following discusses tasks of the intelligence response modules 108-1 to 108-N and 110 depicted in FIG. 1.

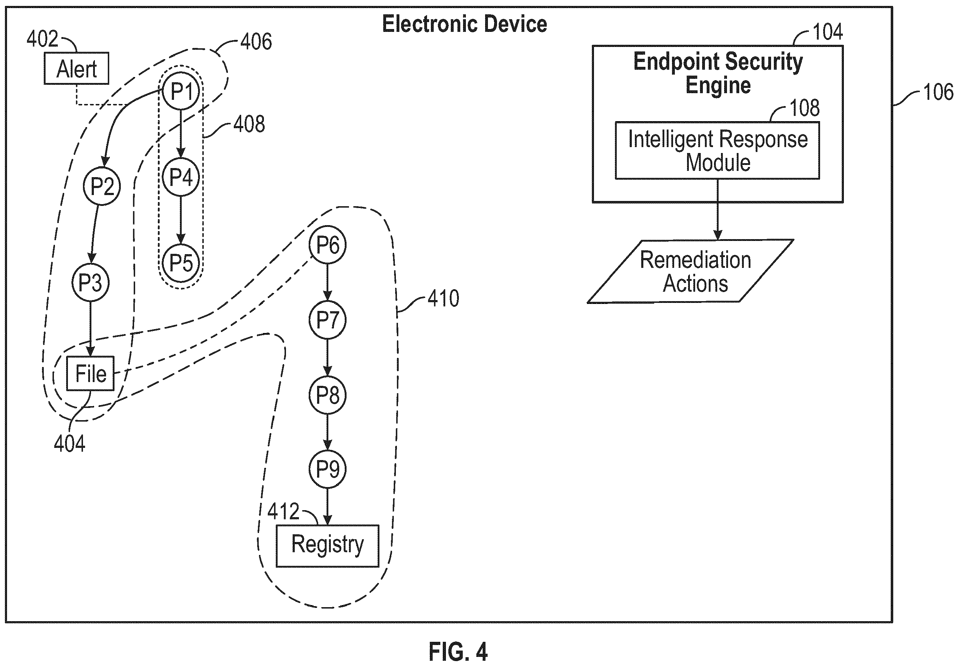

FIG. 4 is an example graph that illustrates various entities involved in operations of an electronic device 106, which can be any of the electronic devices 106-1 to 106-N of FIG. 1. In the example of FIG. 4, a process P1 starts a process P2. For example, the process P1 can issue a command to start the process P2. The endpoint security engine 104 (any one of the endpoint security engines 104-1 to 104-N) in the electronic device 106 may issue an alert 402 based on information associated with the process P1 starting the process P2 satisfying a security alert criterion. For example, the security alert criterion may specify that a process of a given first program should not be starting a process of a given second program during a particular time interval or under conditions currently present in the electronic device 106.

As further shown in FIG. 4, the process P2 starts a process P3, which in turn creates or modifies a file 404 (an example of an artifact). The processes P1 to P3 and the file 404 are part of a chain 406 of directly related entities, where the chain includes a sequence of entities that were created or modified in the depicted order (chronological order or causal order). A chain of "directly related entities" refers to entities in which a direct relationship exists between successive entities in the sequence. A direct relationship exists between a first entity and a second entity if the first entity affected an operation of the second entity (e.g., one process starting another process) or the first entity created or modified the second entity, or if the second entity affected an operation of the first entity or the second entity created or modified the first entity.

FIG. 4 shows another chain 408 of directly related entities, including processes P1, P4, and P5 (e.g., P1 started P4, which started P5). FIG. 4 further shows another chain 410 of directly related entities, which include the file 404, processes P6, P7, P8, and P9, and a registry 412. In some examples, the file 404 may be directly related to the process P6 if the file 404 contains the image (including machine-readable instructions) for the process P6. In other words, the file 404 contains machine-readable instructions of a program that when executed results in the process P6. In the chain 410 of directly related entities, the process P6 started the process P7, which started the process P8, and which started the process P9. The process P9 updated the registry 412, such as by adding or modifying an entry of the registry 412.

By the time the alert 402 is generated, the process P3 may have already been started and the file 404 may have been created by the process P3. The file 404 in turn may have led to the launching of the process P6, which triggered respective processes P7, P8, and P9, along with the modification of the registry 412.

In the example of FIG. 4, the processes P1 and P2 are associated with the alert 402 because the process P1 starting the process P2 caused the endpoint security engine 104 to issue the alert 402. The process P3 is within the scope of the alert 402 because the process P3 was started by the process P2 that is associated with the alert 402. However, in the chain 406 of directly related entities, the file 404 is outside the scope of the alert 402 because the file 404 is not directly related to the processes P1 and P2 that are associated with the alert 402.

Even if a remediation action were to be applied with respect to processes P1, P2, and P3 (e.g., by terminating the processes P1, P2, and P3), which are the processes within the scope of the alert 402, a traditional security system may not make a determination that a remediation action should be applied to the file 404 that is outside the scope of the alert 402. Similarly, the traditional security system may not make a determination that remediation actions should be applied to processes P4, P5, P6, P7, P8, P9, and the registry 412 that are also outside the scope of the alert 402.

If remediation actions are not taken with respect to entities outside the scope of the alert 402, then security issues may be arise later, as one or more of the file 404, the processes P4, P5, P6, P7, P8, P9, and the registry 412 may cause a malfunction in the electronic device 106 or cause data loss or theft in the electronic device 106.

A human analyst may manually study the operations of the electronic device 106 in an attempt to ascertain what entities may be outside the scope of the alert 402, and what if any remediation actions should be taken. However, such a manual analysis is time-consuming, and the human analyst may miss certain entities that may be malicious. Moreover, the time delay involved in performing the manual analysis may allow for malicious entities to perform their respective activities in the electronic device 106.

In accordance with some implementations of the present disclosure, the intelligent response module 108 (which can be any of the intelligent response modules 108-1 to 108-N) in the electronic device 106 can automatically determine appropriate remediation actions to address entities that are outside the scope of the alert 402. Note that the data analyzed by the intelligent response module 108 is provided from an adaptive data collector. The intelligent response module 108 is able to discover all malicious parent processes, children processes, sibling processes, other indirectly related processes, objects, and resources that may be directly or indirectly related to the alert 402 (based on the data collected by the adaptive data collector). The intelligent response module 108 can dynamically determine the appropriate remediation action for each respective entity based on a type of the respective entity, a relationship of the respective entity to entities associated with the alert, a context of the alert, an expected remediation action directive by a customer (e.g., the intelligent response module may be provided with information of preferred remediation actions from a user of an electronic device), and so forth. In this way, the intelligent response module 108 is able to remove the burden from users and also is able to automatically handle remediation actions to be applied to downstream threats that cannot be known at the time of the alert. The remediation action to apply can be based on predefined rules or based on applying machine learning.

Although the present examples refer to the intelligent response module 108 making a determination of what remediation actions to apply in response to an alert, in other examples, the intelligent response module 110 in the central security service 102 can make a determination of what remediation actions to apply in response to the alert. In yet further examples, the determination of remediation actions to be applied can be based on cooperation between multiple intelligent response modules (any combination of 110 and 108-1 to 108-N).

Remediation actions to be applied can be based on the type of entity. For example, a remediation action for a process can include a terminate action, which stops execution of the process and tears down the process so that the process cannot restart again.

A remediation action for an artifact such as a file can be any or some combination of the following: delete (to remove the artifact from a storage), quarantine (to place the artifact in an isolated location to prevent access of the artifact and to prevent the artifact from triggering any activity), rollback (to place the artifact in a prior state, such as to revert a version of a file to a prior version), add to watchlist (to place the artifact on a list that is to be monitored), and so forth.

A remediation action for a resource such as a website, a domain, etc., can be any or some combination of the following: terminate a connection to the resource, block the resource, block an IP address associated with the resource, add the resource to a watch list, and so forth.

A remediation action for configuration information (e.g., a registry or registry entry) is to revert the configuration information from a current state to a prior state, or to delete the configuration information.

A remediation action for a user is to block the user from accessing an electronic device or a network, such as by invalidating credentials for the user or locking a user account.

In some examples, each type of entity can be associated with a set of potential remediation actions that can be applied. The set of potential remediation actions associated with each type of entity can be stored in a data structure (e.g., a database, a library, etc.) that is accessible to an intelligent response module.

Examples of relationships between entities can include a parent relationship, a child relationship, and a sibling relationship. A "parent" process may be a process that starts another process. In the example of FIG. 4, the process P1 is a parent of the process P2, and the process P2 is a parent of the process P3. A "child" process is a process started by another process. In the example of FIG. 4, the process P2 is a child of the process P1, and the process P3 is a child of the process P2. A parent process and a child process have a direct lineage to one another. If a remediation action were to be applied to the parent process (e.g., shut down the parent process), then the intelligent response module 108 would also determine that the same remediation action would be applied to the child process, based on the direct lineage.

More generally, a "lineage" can refer to a link between entities that are part of a chain of directly related entities, such as the chain 406. If the graph of FIG. 4 is a tree, then the chains 406, 408, and 410 are branches of the tree. Entities in a tree branch have direct lineages to one another.

A "sibling" process is a process that shares a common parent. In the example of FIG. 4, the process P2 and the process P4 are sibling processes because they share a common parent process P1. The processes P3 and P5 are also sibling processes because they share a common grandparent process P1. The process P2 and P4 have a sibling relationship with one another. Similarly, the processes P3 and P5 have a sibling relationship with one another. Based on this sibling relationship, the intelligent response module 108 would determine that a remediation action would have to be applied to the process P4 if a remediation action is identified for the process P2.

Another type of relationship includes a relationship in which a process is spawned based on an artifact (e.g., a file containing an image of the process) or a relationship in which a behavior of the process is affected by another object (e.g., a registry entry). Such relationships are examples of functional relationships between different types of entities (a process and an artifact or a process and a registry).

Another type of relationship is an interaction relationship, such as in an example where a file is downloaded from a website or obtained from another resource, or where a process interacts with a website or another resource.

Although some examples of relationships are noted above, there may be many other types of relationships between entities. Remediation actions can be applied based on relationships between entities.

The context of an alert can include any or some combination of the following: a severity of the alert, a risk of the alert, a uniqueness of an anomaly associated with the alert, an intelligence associated with the alert, and so forth. A security system (e.g., an endpoint security engine 104-1 to 104-N and/or the central security service 102) may classify the severity of the alert into multiple severity categories (e.g., high, medium, low or a value from a numerical range). The severity category for the alert can be based on the type of activity involved between entities that gave rise to the alert. For example, a modification of a registry entry for an OS may be classified into a high severity category, while sending an email may be classified into a low severity category.

The security system may classify the risk of the alert into multiple risk categories (e.g., high, medium, low or a value from a numerical range). If the alert is part of a collection of alerts that occurred in a relatively short amount of time, the security system may classify the alert as having a high risk. However, if the alert is an individual alert with no other alerts issued close in time to the alert, the security system may classify the alert as having a low risk.

The security system may classify the uniqueness of the alert based on an anomalous pattern associated with the alert. The anomalous pattern includes a pattern of the types of entities and activities involved in giving rise to the alert. The pattern can be compared to past patterns that have been encountered. If the pattern was not previously encountered or has been encountered with relatively low frequency, then the security system can classify the uniqueness of the alert as high. On the other hand, if the pattern has been frequently encountered in the past, then the security system can classify the uniqueness of the alert as low. Information of patterns that have been encountered can be stored in a database, for example, and compared to newly encountered patterns giving rise to alerts.

In the example of FIG. 4, an intelligent response module (any or some combination of 110 and 108-1 to 108-N) can determine the following potential remediation actions to be applied to the various entities shown in FIG. 4: terminate processes P1 to P9, quarantine the file 404, and revert the registry 412.

Based on the context of the alert 402, the intelligent response module can determine whether to be more lenient or less lenient. Being more lenient would result in the intelligent response module applying remediation actions against a smaller collection of entities or applying less severe remediation actions, while being less lenient would result in the intelligent response module applying remediation actions against a larger collection of entities or applying more severe remediation actions.

A less severe remediation action can include adding an artifact to a watch list rather than deleting or reverting the artifact. More severe remediation actions can include deleting the artifact rather than just quarantining the artifact, quarantining an electronic device to prevent any communication in and out of the electronic device, shutting down the electronic device, locking a user account.

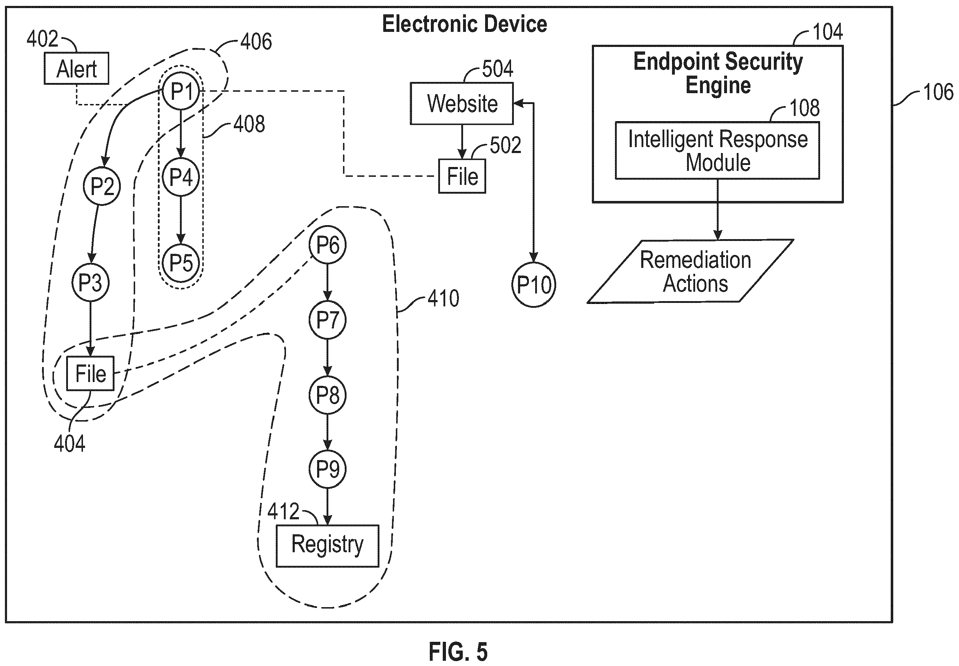

FIG. 5 is another example graph that illustrates various entities involved in operations of the electronic device 106. The graph of FIG. 5 includes the processes P1 to P9, the file 404, and the registry 412 shown in FIG. 4. In addition, the graph of FIG. 5 includes a file 502 that was downloaded from a website 504. The graph of FIG. 5 further includes a process P10 that interacts with the website 504 over a network connection. The file 502 may contain an image for the process P1. The intelligent response module 508 (by itself or in coordination with another intelligent response module such as 110) may identify the additional entities (502, 504, P10) in response to the alert 402. The intelligent response module 508 may also determine remediation actions to take with respect to the additional entities, including, for example, quarantining the file 502, blocking the website 504, and terminating the network connection between the process P10 and the website 504.

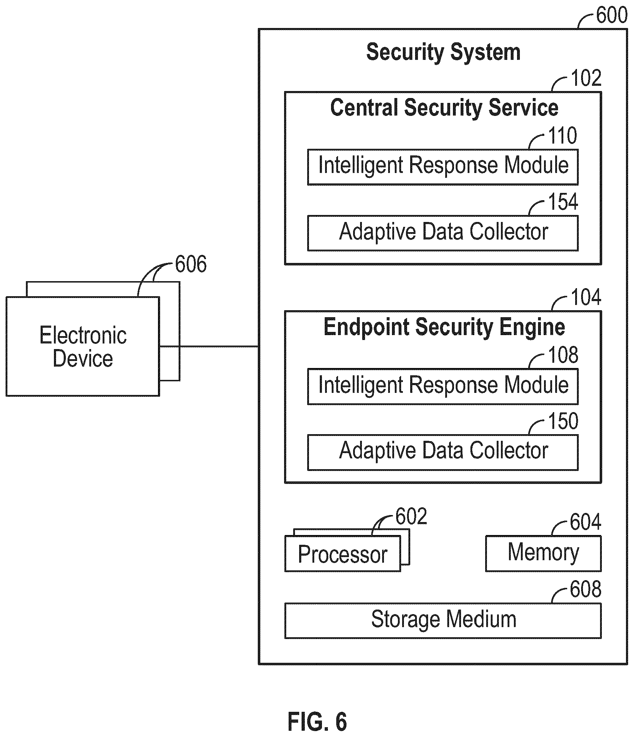

FIG. 6 is a block diagram of an example arrangement that includes a security system 600 for protecting electronic devices 606 (e.g., electronic devices 106-1 to 106-N in FIG. 1). The security system 600 includes the central security service 102 (which includes the intelligent response module 110 and the adaptive data collector 154) and the endpoint security engine 104 (which includes the intelligent response module 108 and the adaptive data collector 150). Although just one endpoint security engine 104 is depicted in FIG. 6, there would be multiple endpoint security engines in respective multiple electronic devices 606.

The security system 600 includes one or more hardware processors 602 and a memory 604. The central security service 102 and the endpoint security engine 104 are executable on the one or more hardware processors 602. Note that the endpoint security engine 104 is executable on one or more processors in an electronic device 606, and the central security service 102 is executable on one or more processors in a computer (or collection of computers) separate from the electronic devices 606. Machine-readable instructions of the central security service 102 and the endpoint security engine 104 can be stored in a non-transitory machine-readable or computer-readable storage medium 608, and the machine-readable instructions can be retrieved from the storage medium 608 for execution on the one or more hardware processors 602.

In some examples, the machine-readable instructions of the security system 600 are executable to monitor operations in at least one electronic device in which entities are started, created, or modified, and generate an alert based on the monitoring. The machine-readable instructions of the security system 600 are executable adapt an amount of data collected based on contextual information associated with the alert, where the adapting of the amount of data collected includes determining whether to include or exclude data associated with a subset of the entities (e.g., P11 and A9 in FIG. 1) based on any relationships of the subset of the entities to an entity (e.g., any one or more of P1, P2, and A1 in FIG. 1) associated with the alert.

In some examples, the contextual information associated with the alert indicates a severity of the alert, and the adapting of the amount of data collected includes increasing the amount of data collected in response to a higher severity of the alert.

In some examples, the contextual information associated with the alert indicates a risk to the at least one electronic device, and the adapting of the amount of data collected includes increasing the amount of data collected in response to a higher risk to the at least one electronic device.

In some examples, the contextual information associated with the alert indicates a uniqueness of an anomaly indicated by the alert, and the adapting of the amount of data collected is based on the uniqueness of the anomaly. The uniqueness of the anomaly is based on a pattern of one or more entities giving rise to the alert. The anomaly is more unique if a quantity of occurrence of the pattern detected in the at least one electronic device is lower.

In some examples, the contextual information associated with the alert indicates a frequency of occurrence of an anomaly indicated by the alert, and the adapting of the amount of data collected is based on the frequency of occurrence of the anomaly.

In some examples, the machine-readable instructions classify the alert, and the contextual information includes a type of the alert produced by the classifying.

In some examples, the contextual information associated with the alert indicates an intelligence associated with the alert, and the adapting of the amount of data collected includes increasing the amount of data collected in response to the intelligence indicating that the alert is associated with an entity having a known bad IOC. Any alert that involves an entity having a known bad IOC may be considered a higher risk.

In some examples, the contextual information associated with the alert indicates a unified context associated with events in multiple electronic devices. The adapting of the amount of data collected includes increasing the amount of data collected in the multiple electronic devices responsive to the unified context indicating that events are occurring in at least some of the electronic devices.

In some examples, the machine-readable instructions of the security system 600 are executable to detect an alert generated in response to an operation on an electronic device 606, where the operation involves a group of entities (e.g., a first process and a first entity). The first entity may be another process, an object, a resource, or a user.

In response to the alert, the machine-readable instructions discover a second entity that is outside a scope of the alert, and the machine-readable instructions apply remediation actions with respect to at least the first process, the first entity, and the second entity to address the alert.

More generally, the machine-readable instructions are able to discover an attack chain in response to the alert, where the attack chain includes the group of entities associated with the alert as well as other entities outside the scope of the alert. The machine-readable instructions determine remediation actions to apply to entities of the attack chain based on a plurality of factors, including any or some combination of: a type of each respective entity in the attack chain, a relationship of the respective entity to entities associated with the alert, a context of the alert, an expected remediation action directive by a customer, and so forth.

In an example, the second entity is outside the scope of the alert based on: (1) the first entity being a second process, (2) the alert being raised responsive to the first process starting the second process, and (3) the second entity having an entity type (e.g., an object, a resource, a user, etc.) different from a process. In another example, the second entity is outside the scope of the alert based on the second entity being separate from a chain of directly related entities including the first process and the first entity. For example, the chain of directly related entities is a first tree branch of directly related entities (e.g., 406 in FIG. 4), and the second entity is in a second tree branch of directly related entities (e.g., 408 or 410 in FIG. 4).

There can be many other examples of entities being outside the scope of the alert, including those discussed further above.

In some examples, discovering of the second entity is based on detecting that the second entity is related to an artifact (e.g., the file 404 in FIG. 4) generated by a process (e.g., P3 in FIG. 4) that is part of a chain of directly related entities (e.g., 406) including the first process (e.g., P1 in FIG. 4) and the first entity (e.g., P2 in FIG. 4).

In further examples, the second entity is a resource (e.g., the website 504 in FIG. 5), and discovering the resource is based on detecting that a file (e.g., 502 in FIG. 5) including an image containing machine-readable instructions for the first process is obtained from the resource.

In additional examples, the second entity is a second process, and discovering the second process is based on detecting that the first process and the second process have a common parent. The common parent can be an OS component that started the first and second processes, a file shared by the first and second processes, a web server that launched the first and second processes, a registry entry that both the first and second processes have interacted with, and so forth.

In some examples, the alert is in a first device (an electronic device), and the discovering of the second entity is by a central service (e.g., 102 in FIG. 1). For example, the central service discovers the second entity based on information collected from a plurality of devices connected to the central service. As a further example, the second entity is in a second device different from the first device.

In some examples, the machine-readable instructions of the security system 600 can confirm that remediation actions have been taken with respect to all entities of an attack chain, such as all the entities shown in FIG. 4 or 5.

In some examples, the machine-readable instructions of the security system 600 can determine that a primary remediation action is not possible with respect to the second entity. In response to the determining, the machine-readable instructions of the security system 600 can identify a secondary remediation action to apply against the second entity. For example, the second entity may be a user, and the primary remediation action may be logging the user out of all user accounts and forcing use of a second factor authentication after the user has been logged out. A user account management system responsible for applying the primary remediation action may not be responsive (e.g., the user account management system is busy or down or compromised by an attacker). The machine-readable instructions of the security system 600 can identify another management system that may be able to disconnect the user's access of an electronic device. The secondary remediation action in this example is use of the other management system to disconnect the user's access of the electronic device.

In other examples, other secondary remediation actions can be applied in response to determining that primary remediation actions are not available.

In some examples, the machine-readable instructions of the security system 600 can, in response to the alert, determine a correct order of remediation actions to apply against entities of an attack chain. For example, in FIG. 6, it may be optimal to first block the website 504 and any interaction with the website 504 to prevent downloading of any further compromised files. Next, the security system 600 can quarantine or delete the files 404 and 502 to prevent additional processes from being spawned from the compromised files 404 and 502. Subsequently, the security system 600 can terminate processes.

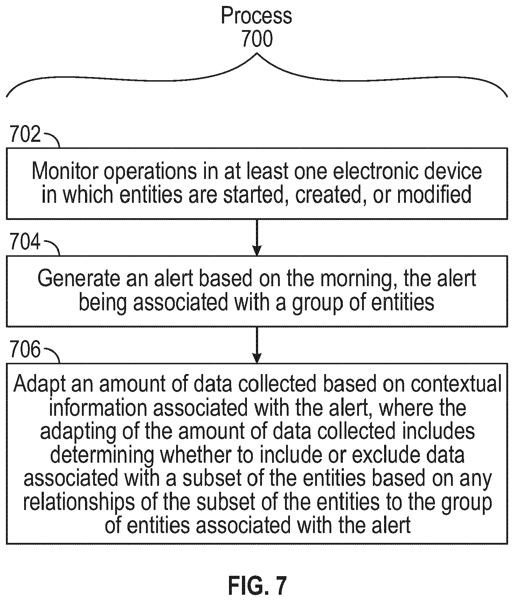

FIG. 7 is a flow diagram of a process 700 according to some examples, which can be performed by a security system. The process 700 includes monitoring (at 702) operations in at least one electronic device in which entities are started, created, or modified. The entities can include any or some combination of processes, objects, resources, users, and so forth.

The process 700 includes generating (at 704) an alert based on the monitoring, the alert being associated with a group of entities. The process 700 includes adapting (at 706) an amount of data collected based on contextual information associated with the alert. The adapting of the amount of data collected includes determining whether to include or exclude data associated with a subset of the entities based on any relationships of the subset of the entities to the group of entities associated with the alert. Examples of contexts that can be represented by the contextual information can include any or some combination of the following: a severity context, a risk context, an anomaly context, a type context, an intelligence context, a unified context, and so forth.

A storage medium (e.g. 116-1 to 116-N in FIG. 1 or 608 in FIG. 6) can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A non-transitory machine-readable storage medium comprising instructions that upon execution cause a system to:
monitor operations in at least one electronic device in which entities are started, created, or modified;
generate an alert based on the monitoring; and
adapt an amount of data collected based on contextual information associated with the alert, wherein the adapting of the amount of data collected comprises determining whether to include or exclude data associated with a subset of the entities based on any relationships of the subset of the entities to an entity associated with the alert.

2. The non-transitory machine-readable storage medium of claim 1, wherein the contextual information associated with the alert indicates:
a severity of the alert, and wherein the adapting of the amount of data collected comprises increasing the amount of data collected in response to a higher severity of the alert;
a risk to the at least one electronic device, and wherein the adapting of the amount of data collected comprises increasing the amount of data collected in response to a higher risk to the at least one electronic device; or.
a risk to the at least one electronic device, and wherein the adapting of the amount of data collected comprises increasing the amount of data collected in response to a higher risk to the at least one electronic device, wherein the risk to the at least one electronic device is based on a quantity of alerts occurring in the at least one electronic device in a time interval.

3. The non-transitory machine-readable storage medium of claim 1, wherein the contextual information associated with the alert indicates a uniqueness of an anomaly indicated by the alert, and wherein the adapting of the amount of data collected is based on the uniqueness of the anomaly.

4. The non-transitory machine-readable storage medium of claim 3, wherein the uniqueness of the anomaly is based on a pattern of one or more entities giving rise to the alert.

5. The non-transitory machine-readable storage medium of claim 4, wherein the anomaly is more unique if a quantity of occurrence of the pattern detected in the at least one electronic device is lower.

6. The non-transitory machine-readable storage medium of claim 1, wherein the contextual information associated with the alert indicates a frequency of occurrence of an anomaly indicated by the alert, and wherein the adapting of the amount of data collected is based on the frequency of occurrence of the anomaly.

7. The non-transitory machine-readable storage medium of claim 1, wherein the instructions upon execution cause the system to:
classify the alert, wherein the contextual information comprises a type of the alert produced by the classifying.

8. The non-transitory machine-readable storage medium of claim 1, wherein the alert is generated for a first electronic device, and the adapting of the amount of data collected is of data in a second electronic device different from the first electronic device.

9. The non-transitory machine-readable storage medium of claim 8, wherein the contextual information comprises contextual information associated with the first electronic device.

10. The non-transitory machine-readable storage medium of claim 9, wherein the adapting of the amount of data collected is performed by the system that is part of a cloud service communicatively coupled to a plurality of electronic devices including the first and second electronic devices.

11. The non-transitory machine-readable storage medium of claim 1, wherein:
the adapting of the amount of data collected is based on an intelligence context specified by the contextual information; or
the entities comprise any or some combination of processes, objects, resources, and users.

12. A security system comprising:
one or more processors; and
a non-transitory storage medium storing instructions executable on the one or more processors to:
monitor operations in at least one electronic device in which entities are started, created, or modified;
generate an alert based on the monitoring, the alert being associated with a group of entities; and
adapt an amount of data collected based on contextual information associated with the alert, wherein the adapting of the amount of data collected comprises determining whether to include or exclude data associated with a subset of the entities based on any relationships of the subset of the entities to the group of entities associated with the alert.

13. The security system of claim 12, wherein the adapting of the amount of data collected comprises excluding the data associated with the subset of the entities in response to:
determining no direct relationship between the subset of the entities and a chain of directly related entities including the group of entities, and
the contextual information indicating any of the following: a lower severity of the alert, a lower risk of the alert, a lower uniqueness of the alert, or a lower frequency of the alert.

14. The security system of claim 12, wherein the contextual information associated with the alert indicates:
a severity of the alert, and wherein the adapting of the amount of data collected comprises increasing the amount of data collected in response to a higher severity of the alert;
a risk to the at least one electronic device, and wherein the adapting of the amount of data collected comprises increasing the amount of data collected in response to a higher risk to the at least one electronic device; or
a uniqueness of an anomaly indicated by the alert, and wherein the adapting of the amount of data collected is based on the uniqueness of the anomaly.

15. A method of a security system comprising a hardware processor, the method comprising:
monitoring operations in at least one electronic device in which entities are started, created, or modified;
generating an alert based on the monitoring, the alert being associated with a group of entities; and
adapting an amount of data collected based on contextual information associated with the alert, wherein the adapting of the amount of data collected comprises determining whether to include or exclude data associated with a subset of the entities based on any relationships of the subset of the entities to the group of entities associated with the alert.
